# EUROPEAN PATENT APPLICATION

(11) **EP 0 790 117 A2**
(43) Date of publication of application: **20.08.1997**
(21) Application number: 97300838.6
(22) Date of filing: 10.02.1997
(51) Int. Cl.: B29C 53/02

(54) **Method of and devices for thermoforming rigid plastic partially-sectioned profiles**

(30) Priority: 14.02.1996 US 601121
(71) Applicant: McCUE CORPORATION, Salem, Massachusetts 01970 (US)
(72) Inventor: Sabin, Douglas G., Marblehead, Massachusetts 01945 (US); Radzius, Dziugas, Hampton, New Hampshire 03842 (US); Ross, Virginia, Greenland, New Hampshire 03840 (US); Bigos, Donald E., North, Berwick, Maine 03906 (US)
(74) Representative: Crawford, Andrew Birkby

(57) **Abstract**

Methods and devices for thermoforming rigid plastic profiles into desired angular configurations are disclosed. The invention involves heating a rigid, plastic, partially-sectioned profile (16) until the profile becomes malleable; and moving at least one of a first mold (12), having a shape substantially corresponding to the desired angular configuration, and a second mold (22), having an angular shape substantially corresponding to and mating with the first mold, into juxtaposition with the other molds such that a zone (14) of the profile (16) is positioned therebetween; and applying a selected pressure to the zone of the profile with the first and the second molds for selected duration until the profile is thermoformed into the desired angular configuration.

## Description

### Background of the Invention

The field of the present invention concerns the thermoforming of plastic, and, in particular, the thermoforming of rigid, plastic partially-sectioned profiles into desired angular configurations. The term "partially-sectioned profiles" as used herein, describes tubing having variably shaped cross-sections, i.e., semi-circular, oblong cross-sections, etc., and having variously sized longitudinal openings.

Partially-sectioned profiles can be used as bumpers for protecting walls and the edges and corners of display cases, display stands and the like, from impact. Such profiles can also be used as devices for smoothing and/or rounding the contours of walls and corners for aesthetic reasons.

Currently, plastic bumpers and smoothing devices are formed in a two-step process. In the first step, straight, rigid, plastic profiles are formed through continuous extrusion processes and cut into various lengths for packaging and shipment. In the second step, angled rigid plastic profiles are formed through injection molding processes and attached to the extruded profiles.

Matching the color size, gloss and other characteristics of the angled injection molded profiles with the straight extrusion molded profiles may be difficult, however, because the plastic of the profiles may behave differently under injection versus extrusion molding conditions. Further, it may be difficult and expensive to create the tooling required for injection molding, particularly where profiles with a wide variety of angles are required in smoothing device-type applications.

Non-injection molding devices and methods have been used for bending and shaping of various materials such as pipes, tubes and sheets. For example, U.S. Patent No. 5,354,533, by Antoine, teaches a method for thermoforming a plastic "work piece" which involves applying a first pressure to the piece while simultaneously heating the piece, shutting off the heat, and applying a second pressure until the desired shape of the piece is obtained.

What the prior art fails to teach, however, are methods or molds for shaping or bending rigid, partially-sectioned profiles into substantially permanent desired configurations. Due to the stretching and compression involved in bending rigid, plastic, partially-sectioned profiles, it was previously thought extremely difficult to bend such profiles into diverse angular configurations. Accordingly, there exists a need to provide simple methods and devices for thermoforming rigid, plastic, partially-sectioned profiles into desired angular configurations, involving quick turnaround and accurate shaping techniques.

### Summary of the Invention

The present invention is based on the recognition that selected molds can be used for quickly and accurately thermoforming rigid, plastic, partially-sectioned profiles into desired angular configurations at selected radii for use as protective and/or aesthetic devices.

In one aspect of the invention, the method for thermoforming a rigid, plastic profile into a desired angular configuration includes the following steps. A rigid, plastic, partially-sectioned profile is heated to a selected temperature until the profile becomes malleable. At least one of a first mold, having a shape substantially corresponding to the desired angular configuration, and a second mold, having an angular shape substantially corresponding to and mating with the first mold, is moved into juxtaposition with the other of the first and the second molds such that a zone of the profile is positioned therebetween. A selected pressure is applied by the first and the second molds to the zone of the profile for a selected duration until the profile is thermoformed into the desired angular configuration.

In embodiments of this aspect of the invention, the profile is cooled until the thermoformed profile is no longer malleable, after which it is removed from the first and second molds. In other embodiments, a flexible, resilient, removable core is positioned inside and along an inner surface of the profile for providing support and applying pressure to the profile during thermoforming.

In another aspect of the invention, a device for thermoforming a rigid, plastic profile into a desired angular configuration is disclosed. The device includes a first mold having a shape substantially corresponding to the desired angular configuration and adapted to contact a zone of a rigid, plastic, partially-sectioned profile; and a second mold having an angular shape substantially corresponding to and mating with the first mold and adapted to contact with the zone of the profile for thermoforming the profile into the desired angular configuration.

In embodiments of this aspect of the invention, the desired angular configuration includes at least one angular shape having a selected radius. The selected radius can vary from about 1 inch to about 24 inches. The desired configuration of the thermoformed profile can include a shape adaptable for attachment to a wall and/or counter.

In other embodiments of the invention, the device includes at least one heating element for heating the profile to a selected temperature until the profile becomes malleable; a drive for moving at least one of the molds into juxtaposition with the other of the molds such that the zone of the profile is positioned therebetween, and the first and the second molds apply a selected pressure to the zone of the profile for a selected duration until the profile is thermoformed into the desired angular configuration; and at least one cooling element for cooling the thermoformed profile until it is no longer malleable. The driving means is adapted to apply a selected pressure from about 100 psi to about 200 psi. In a preferred embodiment, the drive for moving the molds into juxtaposition can also be used for subsequently detaching the molds from each other.

In still other embodiments, the device is adapted for thermoforming a profile having an attachment means for attachment of the profile to a surface; a profile enclosing a flexible, removable core for providing support and applying pressure to the profile during thermoforming; and a profile size of about 1 inch to about 50 inches. The term "profile size", as used herein, refers to the width directly across the cut away cross-section of the profile. The core enclosed in the profile is preferably reusable. The device is also adapted to thermoforming profiles of various longitudinal lengths. The principal limitation regarding the lengths is the size of the chamber and, for this reason, lengths ranging from about 4 feet to about 12 feet are preferred. The device is further adapted to thermoforming profiles with wall thicknesses of about .06 inch to about .125 inch; cross-sectional lengths about the circumference of about 1 inch to about 70 inches; and cross-sectional shapes of half-spheres, of half-oblongs, and/or of wavy shapes. The desired angular configuration can vary from about 45 degrees to about 179 degrees.

### Brief Description of the Drawings

These and other features and advantages of the present invention will be more fully understood by reference to the following detailed description in conjunction with the attached drawing in which like reference numerals refer to like elements and in which:
FIG. 1 is a a plan view of the system for thermoforming rigid, plastic profiles into desired angular configurations, according to an embodiment of the invention;
FIG. 2A is a view of a first mold, according to an embodiment of the invention;
FIG. 2B is a view of a second mold, according to an embodiment of the invention;
FIG. 3 is a view of a second mold in contact with a core and a profile, according to an embodiment of the invention;
FIG. 4 is a view of a drive for moving at least one of the molds into juxtaposition with the other of the molds, and a cooling source for cooling the profile, according to an embodiment of the invention;
FIG. 5 shows a view of a drive for moving at least one of the molds such that the molds are no longer in contact with a core and a thermoformed profile, a removal element for removing the core and the thermoformed profile from the first and the second molds, and a detaching device for detaching the core from the thermoformed profile, according to an embodiment of the invention;
FIG. 6 is a view of a desired configuration of a thermoformed profile having an angular shape with a selected radius, according to an embodiment of the invention;
FIG. 7 is a view of a profile for attachment to a device, such as a track, which can be thermoformed according to an embodiment of the invention;
FIG. 8A is a view of a profile being thermoformed having a half-oblong cross-sectional shape, according to an embodiment of the invention; and
FIG. 8B is a view of a profile being thermoformed having a wavy cross-sectional shape, according to an embodiment of the invention.

### Brief Description of the Invention

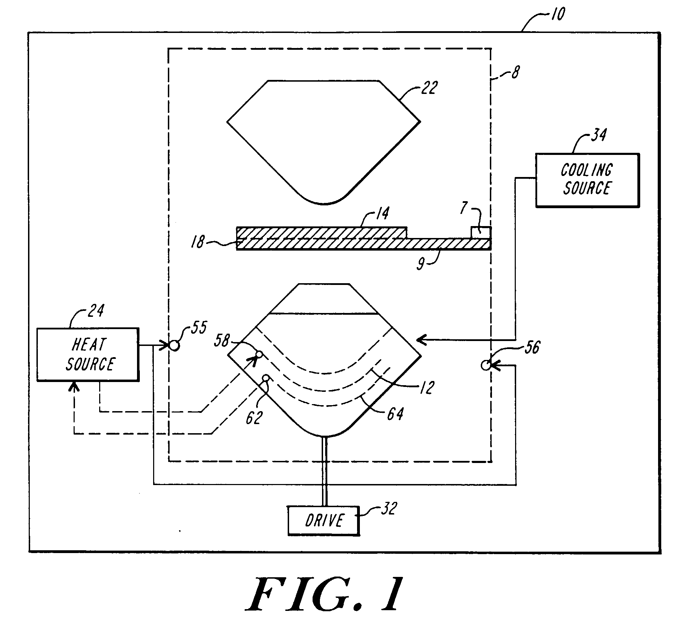

The present invention pertains to methods and devices for thermoforming rigid, partially-sectioned profiles into desired angular configurations for use in protective and/or aesthetic applications. FIG. 1 is a plan view of a chamber 8 within a system 10 for thermoforming profiles according to an embodiment of the invention. The device 10 can include a first mold 12 having a shape substantially corresponding to the desired angular configuration and adapted for contacting a zone 14 of a partially-sectioned profile 16. In one embodiment, profile 16 can enclose a flexible, resilient, removable core 18 for providing support and applying pressure to the profile 16 during thermoforming. This core 18 is preferably formed of a flexible, resilient material, preferably a solid material including, but not limited to, rubber, silicone or urethane. Alternatively, core 18 can be formed of an inflatable material or filled with a fluid. Preferably, the core 18 can be re-used approximately 40 to 50 times.

The system 10 can also include a corresponding second mold 22 having an angular shape substantially corresponding to and mating with the first mold and adapted for contacting with a selected zone 14 of profile 16 and core 18 for thermoforming the selected zone 14 of profile 16 into a desired configuration.

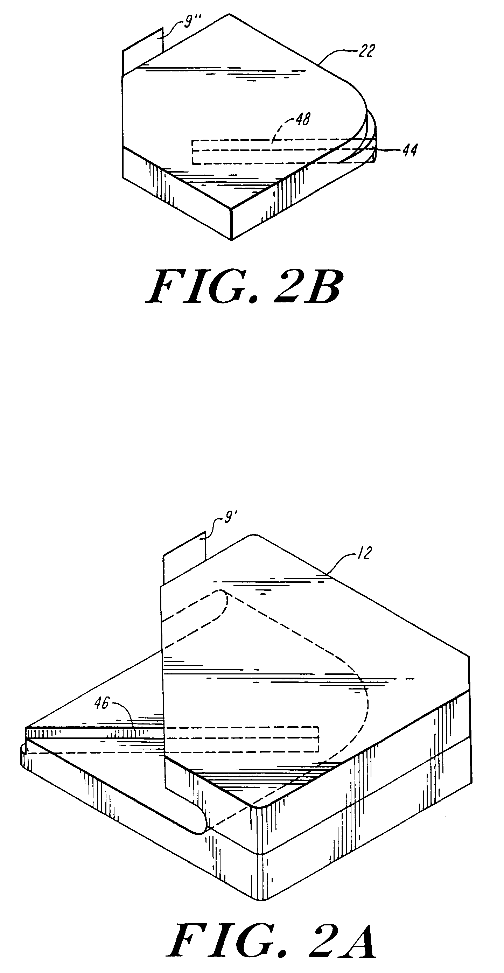

At least one clamp 9 and a stop mechanism 7 can be disposed in the chamber for attaching the profile 16 to position the selected desired angular configuration. In alternative embodiments, the clamp can be disposed on the first mold 12 (see element 9' in FIG. 2A) or on the second mold 22 (see element 9" in FIG. 2B).

In addition, as shown by FIG. 1, the system 10 can include a heating source 24 for supplying heat to the chamber 8 for heating the profile 16 to a selected temperature until the profile 16 becomes malleable. The system 10 can further include a drive 32 for driving at least one of the molds into juxtaposition with the other of the molds such that the zone 14 of the profile 16 is positioned therebetween, and the first 12 and the second 22 molds apply a selected pressure to the zone 14 of the profile 16 for a selected duration until the malleable profile is thermoformed into a desired configuration. FIG. 1 further illustrates a cooling source 34 for cooling the profile 16.

In the practice of the invention, the profile 16 and the core 18 can be placed inside the chamber 8 of the device 10. The heat source 24 can be used to supply heat via ports 55 and 56 to heat the profile 16 and the core 18 externally at a selected temperature and for a selected duration until the profile becomes malleable. In preferred embodiments, the temperature selected ranges from of about 180 °F to about 300 °F, and the duration of heating ranges from about 30 seconds to about 4 minutes. Device 10 can include additional heating sources within the chamber. Device 10 can also include additional preheating devices outside the chamber for pre-heating the profile 16 to about 175 °F prior to subsequent further heating of the profile 16 inside the chamber 8.

Alternatively, heating fluids can be supplied to the first mold 12 directly via an input port 58 and exit via an exit port 62, and the fluid can be passed through a heating fluid channel 64 inside the first mold. Heating fluids can also be directly supplied to and from input and exit ports connected to a heating channel disposed on the second mold 22. In still another embodiment, the core 18 can be heated and used for heating the profile 16. Types of heating mechanisms known in the art, such as hot air blowers or electric coils, which do not affect the color or texture of the profile 16, can be used for heating profile 16. Examples of heating fluids that can be used include hot water, steam, air and oil.

FIG. 2A illustrates a view of the first mold 12 according to an embodiment of the invention. In one embodiment, the first mold 12 can include a guide passageway 46 for guiding the second mold 32.

FIG. 2B illustrates the second mold 22, according to an embodiment of the invention. The second mold 22 can include a front portion, or tongue 44, which contacts the zone 14 of the profile 16. Since the profiles have a tendency to shrink away from the tongue 44 of the second mold 22 during contact between the second mold 22, the profile 16, and/or the core 18, the tongue 44 is typically designed with an increase in radius greater than the radius of the desired configuration. The radius increase results in the desired angular configuration having a visibly flatter surface on the outside of the zone 14 of the profile 16 and a tighter fit when attached to a surface. The second mold 22 can further include a guide 48 for passage along the guidance passageway 46 of the first mold 12.

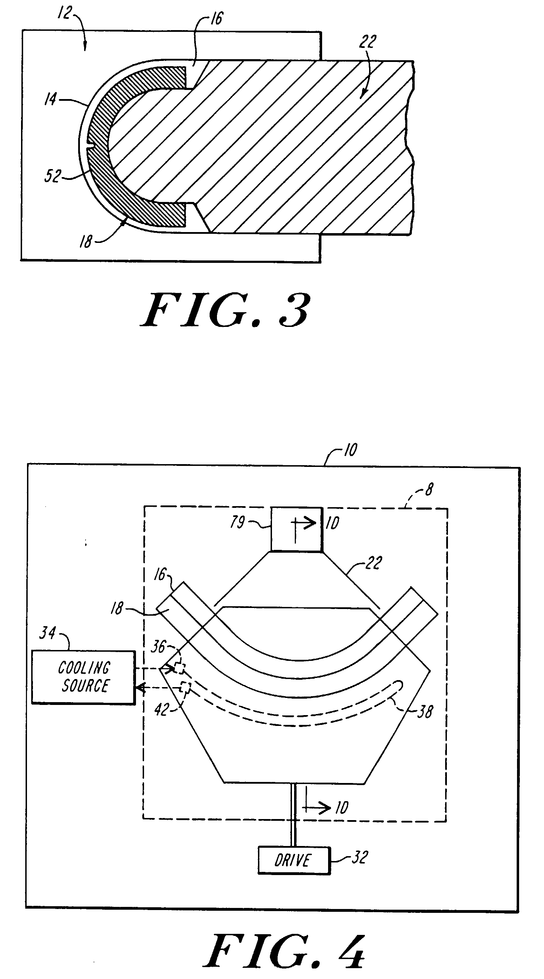

FIG. 3 illustrates the first mold 12 and the second mold 22 in juxtaposition with each other, and the zone 14 of the profile 16 and the core 18 positioned therebetween. The resilient, flexible core 18 can be disposed inside and along an inner surface 52 of the rigid, plastic, partially-sectioned profile.

Various materials can be used for forming the first and second molds. Examples of such materials include, but are not limited to, wood, aluminum and steel.

The drive 32 can be used to move the first mold 12 and/or the second mold 22 such that the first mold 12 and the second mold 22 are in juxtaposition with each other and the zone 14 of the malleable profile 16 and the core 18 are positioned therebetween, as shown in the embodiment illustrated in FIG. 4. In one embodiment, the chamber 8 can include a slideway 79 for aligning and guiding movement of the molds. A selected pressure is applied by the molds to the zone 14 of the malleable profile 16 for a selected duration until the malleable profile 16 is thermoformed into the desired angular configuration.

While such pressure is maintained, profile 16 and the core 18 can then be cooled with a cooling source 34 until the profile 16 is no longer malleable. In one embodiment, the illustrated cooling source 34 can chill the entire chamber 8. Device 10 can also include additional cooling sources. In other embodiments, the first mold 12 can include at least one input port 36 for receiving from the cooling source 34 a cooling fluid for cooling the profile 16. The cooling fluid can travel along at least one channel 38 and exit the first mold 12 via one or more exit ports 42. The second mold 22 can also include input and exit ports and a cooling fluid channel for cooling the profile 16. In still another embodiment, the core 14 can be used for cooling the profile 16. Various types of fluids can be used to cool the chamber 8, profile 16 and/or the core 18. Examples of such cooling fluids include, but are not limited to, water and chilled air. The length of time for cooling when using a cooling source 34 ranges from as little as 5 seconds to about 30 seconds. In another embodiment, the profile 16 can be allowed to cool to ambient temperature without using a cooling source 34, but the duration of such cooling will naturally take longer.

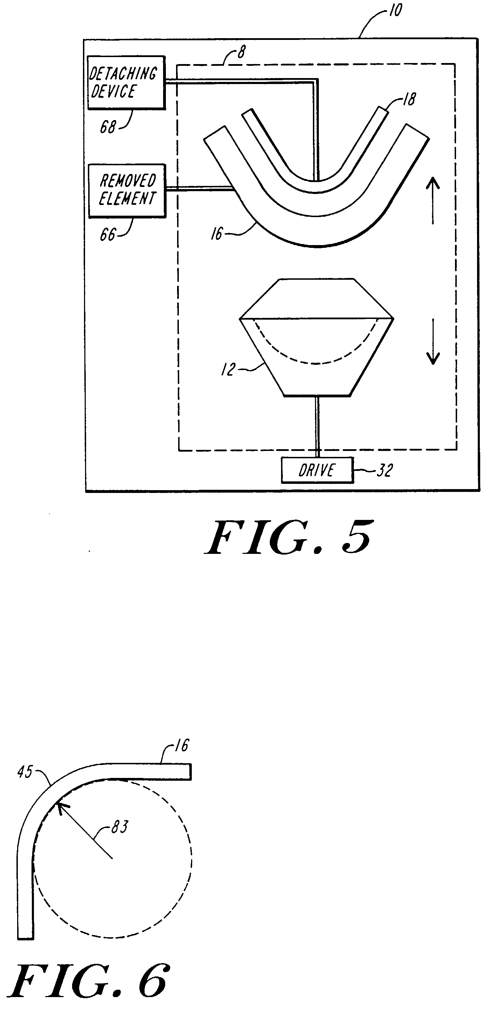

At least one of the molds can be moved with the drive 32 such that the mold is no longer in contact with a thermoformed profile 16 and the core 18. The embodiment shown in FIG. 5 illustrates the drive 32 moving the second mold 22 such that the mold is no longer in contact with the thermoformed profile 16 and the core 18. Alternatively, the drive 32 can move the first mold 12 such that the mold is no longer in contact with the thermoformed profile 16 and the core 18. In a further embodiment, the drive 32 can move both of the molds away from contact with the thermoformed profile 16 and the core 18. If still attached to a mold, the thermoformed profile 16 can then be removed from the mold, preferably aided by a removal element 66, and detachment from the core 18 can be accomplished by a detaching element 68. Alternatively, the thermoformed profile 16 and the core 18 can be removed manually from the mold, and the core 18 detached manually from the thermoformed profile 16.

FIG. 6 is a view of a desired configuration of a half-round thermoformed profile 16 with a flattened outer surface 45, according to an embodiment of the invention. The desired configuration can be an angular shape with a radius 83. Such a radius can vary from about 1 inch to about 24 inches. The angle between the "legs" of the desired configuration can range from 45 degrees to about 179 degrees.

The desired configuration of a thermoformed profile 16 can be of a shape adaptable for attachment to a wall, stand, counter and the like.

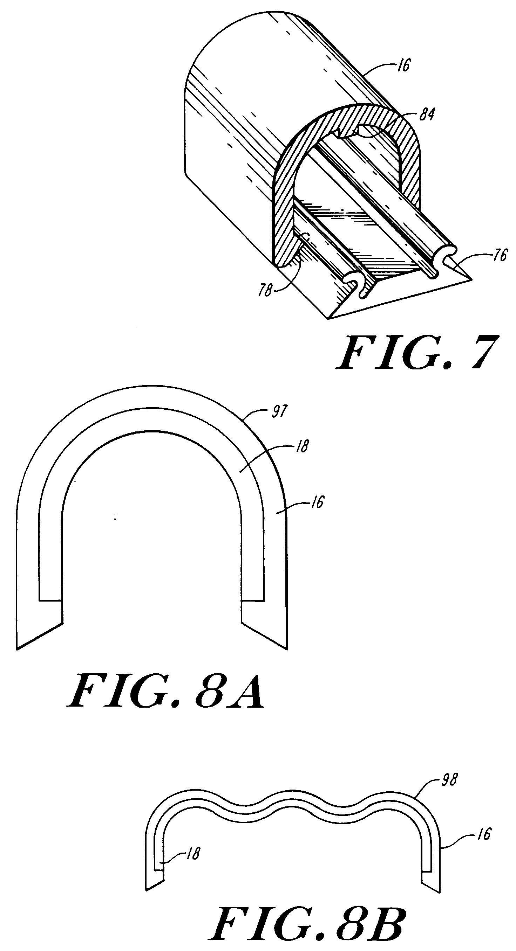

FIG. 7 is a cross-sectional view of a thermoformed profile 16 being attached to a device 76, such as a track, for mounting the profile to a surface. Such a track can then be mounted to a wall, a counter or other like device. The profile being thermoformed can have at least one lip 78 extending along a longitudinal length of an outer edge of the profile and angled toward an inner surface of the profile. Such a lip 78 can be used for attachment of the profile to a surface. The profile being thermoformed can also have a rib 84 extending along a longitudinal length of an inner surface of the profile. Such a rib 84 can provide strength for the profile.

The methods and devices of the invention are effective for thermoforming profiles having profile sizes of about 1 inch to about 50 inches; longitudinal lengths of about 4 feet to about 12 feet; wall thicknesses of about .06 inch to about .125 inch; and cross-sectional lengths about the circumference 94 of about 1 inch to about 70 inches.

The methods and devices of the present invention are also effective for profiles having a variety of cross-sectional shapes. FIG. 8A shows a profile 16 with a half-oblong cross-sectional shape 97; and FIG. 8B shows a profile 16 with a wavy cross-sectional shape 98.

In sum, the present invention benefits from the recognition that rigid, plastic profiles can be thermoformed into angular shapes of selected radii for application as protective and/or aesthetic devices. The methods and systems have several advantages over the prior art. The present invention involves the thermoforming of partially-sectioned profiles. In addition, the system design is simple as it involves only one heating step and one contacting step 6. It will be understood that the above description pertains to only several embodiments of the present invention. That is, the description is provided by way of illustration and not by way of limitation. The invention is further characterized according to the following claims.

## Claims

1. A method for thermoforming a rigid, plastic profile into a desired angular configuration, said method comprising the steps of:
heating a rigid, plastic, partially-sectioned profile at a selected temperature and for a selected duration until the profile becomes malleable;
moving at least one of first mold, having a shape substantially corresponding to the desired angular configuration, and a second mold, having an angular shape substantially corresponding to and mating with the first mold, into juxtaposition with the other of said first and said second molds such that a zone of the profile is positioned therebetween; and
applying a selected pressure with the first and the second molds to the zone of the profile for a selected duration until the profile is thermoformed into the desired angular configuration.

2. The method of claim 1, further comprising the step of.
cooling the profile until the thermoformed profile is no longer malleable.

3. The method of claim 1, further comprising the steps of.
detaching the thermoformed profile from the first mold and the second mold.

4. In method of claim 1, further comprising the step of.
positioning a flexible, resilient, removable core inside and along an inner surface of the profile for providing support and applying pressure to the profile during thermoforming.

5. An apparatus for thermoforming a rigid, plastic profile into a desired angular configuration comprising:
a first mold having a shape substantially corresponding to the desired angular configuration and capable of contacting a zone of a rigid, plastic, partially-sectioned profile; and
a second mold having an angular shape substantially corresponding to and mating with the first mold and adapted to contact with the zone of the profile for thermoforming the profile into the desired angular configuration.

6. The apparatus of claim 5, wherein the desired angular configuration comprises at least one angular shape having a selected radius.

7. The apparatus of claim 6, wherein the selected radius ranges from about 1 inch to about 24 inches.

8. The apparatus of claim 5, further comprising:
means for heating the profile to a selected temperature until the profile becomes a malleable profile.

9. The apparatus of claim 5, further comprising:
means for driving at least one of said first and said second molds into juxtaposition with the other of said first and said second molds such that the zone of the profile is positioned therebetween, and said first and said second mold apply a selected pressure to the zone of the profile for a selected duration until the profile is thermoformed into the desired angular configuration.

10. The apparatus of claim 9, wherein the driving means is adapted to apply a selected pressure of about 100 psi to about 200 psi.

11. The apparatus of claim 9, further comprising:
means for cooling the thermoformed profile until the thermoformed profile is no longer malleable.

12. The apparatus of claim 5, wherein the apparatus is adapted to thermoforming a profile having an attachment means for mounting the profile to a surface.

13. The apparatus of claim 5, wherein the apparatus is adapted to thermoforming a profile enclosing a flexible, resilient, removable core for providing support and applying pressure to the profile during thermoforming.

14. The apparatus of claim 6, wherein the apparatus is adapted to thermoforming a profile having a profile size of about I inch to about 50 inches.

15. The apparatus of claim 6, wherein the apparatus is adapted to thermoforming a profile having a longitudinal length of about 4 feet to about 12 feet.

16. The apparatus of claim 6, wherein the desired angular configuration varies from about 45 degrees to not more than 179 degrees.

17. The apparatus of claim 6, wherein the apparatus is adapted to thermoforming a profile having a cross-section with a shape of a half-sphere.

18. The apparatus of claim 6, wherein the apparatus is adapted to thermoforming a profile having a cross-section with a shape of a half-oblong.

19. The apparatus of claim 5, wherein the apparatus is adapted to thermoforming a profile having a cross-section with a wavy shape.

20. An apparatus for thermoforming a rigid, plastic profile into a desired angular configuration comprising:
a first mold having a shape substantially corresponding to the desired angular configuration and capable of contacting a zone of a rigid, plastic, partially-sectioned profile;
a second mold having an angular shape substantially corresponding to and mating with the first mold and capable of contact with the zone of the profile for thermoforming the profile into the desired angular configuration;
means for heating the profile to a selected temperature until the profile becomes a malleable profile; and
means for driving at least one of said first and said second molds into juxtaposition with the other of said first and said second molds such that the zone of the profile is positioned therebetween, and said first and said second molds apply a selected pressure to the zone of the profile for a selected duration until the profile is thermoformed into the desired angular configuration.

21. The apparatus of claim 20, further comprising:
means for cooling the thermoformed profile until the thermoformed profile is no longer malleable.
